Europäisches Patentamt

**European Patent Office**

**Office européen des brevets**

(19)

(11) Publication number: **0 120 617**
**B1**

# (12) EUROPEAN PATENT SPECIFICATION

(45) Date of publication of patent specification: **06.05.87**

(51) Int. Cl.⁴: **F 16 H 5/78**

(21) Application number: **84301303.8**

(22) Date of filing: **28.02.84**

(54) **Transmission control system.**

(30) Priority: **24.03.83 GB 8308189**

(43) Date of publication of application:
**03.10.84 Bulletin 84/40**

(45) Publication of the grant of the patent:
**06.05.87 Bulletin 87/19**

(84) Designated Contracting States:
**AT BE DE FR GB IT NL SE**

(56) References cited:
**GB-A-2 064 028**
**GB-A-2 071 794**
**GB-A-2 095 775**
**GB-A-2 103 317**
**US-A-3 908 486**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Young, Alastair John**
**39 Roundshill**
**Kenilworth Warwickshire (GB)**
Inventor: **Parsons, David**
**2, Malthouse Lane**
**Kenilworth Warwickshire (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

EP 0 120 617 B1

## Description

The invention relates to control systems for automatic power transmissions of the kind providing forward gear ratios, neutral and reverse gear ratios in which forward ratio changes are effected under power by releasing one clutch inter-connecting the transmission input and output through one engaged gearset simultaneously with engaging another clutch inter-connecting the input and output through another engaged gearset. A transmission of this kind is known from GB—A—2064028.

In automatic transmissions of this kind, it is normally proposed to provide electronic sensing of factors such as road speed and engine torque and from these to derive electrical signals for gear ratio selection. It is also normal to provide one hydraulically operated gear actuator for each ratio which in turn normally requires one actuator for each gearset. Power for the actuators is derived from an engine-driven pump and the control of fluid under pressure from the pump to gear actuators is effected by electro-hydraulic valves which are normally referred to as solenoid valves. Unless one solenoid valve is provided for every gear actuator, it is normal to provide one or more spool valves between the solenoid valves and the gear actuators so that some actuators are operated in response to a combination of opened solenoid valves. In this way, with a conventional arrangement, four solenoid valves are required for a transmission with four forward ratios, neutral, one reverse ratio and provision for temporary engagement of two forward ratios while changing gear, see for example GB—A—2071794.

A problem associated with a transmission of this nature is that in the event of an electrical failure, there is a danger that the transmission will be left uncontrollably in a driving condition either in a forward ratio or in reverse, even when the selector mechanism provided for control of the transmission by a vehicle driver is set to neutral.

An object of the present invention is to provide a transmission control system in which this disadvantage is obviated and in a preferred form of the invention economies can be made in the numbers of components in the control system.

According to the present invention there is provided an electro-hydraulic control system for an automatic power transmission of the kind providing forward gear ratios, neutral and reverse gear ratio in which forward ratio changes are effected under power by releasing one clutch interconnecting the transmission input and output through one engaged gearset simultaneously with engaging another clutch interconnecting input and output through another engaged gearset, the control system comprising hydraulic gear actuators each for engaging and disengaging a separate gearset, electro-hydraulic valves for controlling the supply of hydraulic fluid to the actuators in response to electrical ratio selection signals, as known from GB—A—2071794, characterised by the provision of a manually operable hydraulic mode selector valve arranged to supply the electro-hydraulic valves with fluid under pressure when a driving mode is selected thereby but to cut off all possible fluid pressure supply to and thus from the electro-hydraulic valves when a non-driving mode such as neutral is selected.

Preferably common ratio selection signals are provided for reverse gear ratio and a forward ratio and the hydraulic output of the electro-hydraulic valves is supplied via the mode selector to either the reverse gear actuator or the forward gear actuator for the last mentioned forward ratio dependent on whether a forward mode or a reverse mode is selected. Preferably said forward ratio is first (lowest) gear ratio.

There may be three electro-hydraulic valves provided for a four-gear ratio and reverse transmission wherein a first electro-hydraulic valve controls operation of third gear actuator, a second electro-hydraulic valve controls operation of fourth gear actuator through a change-over valve which when the third electro-hydraulic valve is energised is changed over to control a supply to the mode selector and hence to first or reverse actuator, the third electro-hydraulic valve controlling supply to second gear actuator as well as the change-over valve, second gear being held disengaged by the second clutch when first or reverse is engaged through the first clutch.

An embodiment of the invention will now be described by way of example only with reference to the accompanying drawings in which:—

Figure 1 is a diagrammatic layout of a transmission according to the invention: and

Figure 2 is a hydraulic circuit diagram for the transmission of Figure 1.

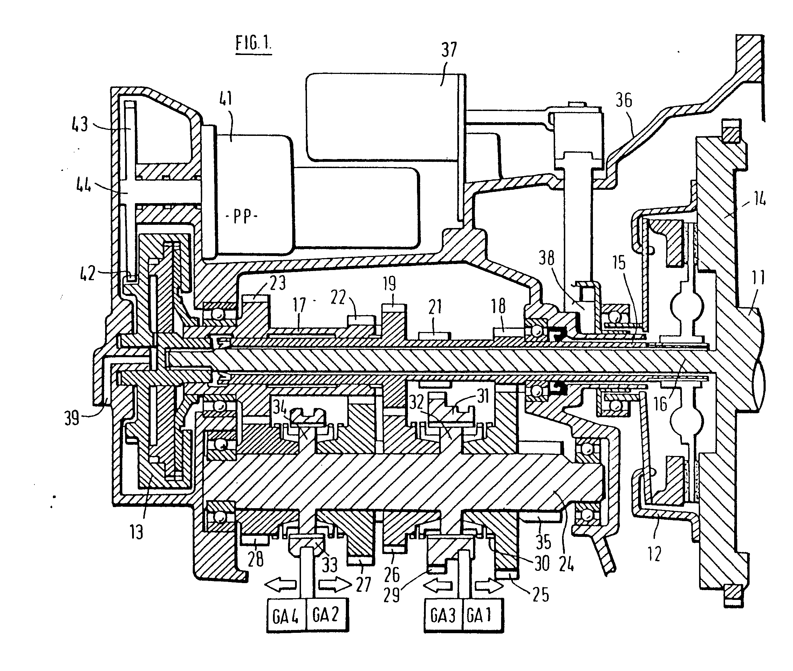

Referring first to Figure 1, an input shaft 11 is connected permanently to a first clutch 12 and a second clutch 13. The first clutch 12 is mounted on a flywheel 14 and when engaged drives a hollow input shaft 15. A shaft 16 passes through the hollow shaft 15 to drive clutch 13, which is a wet clutch running in oil. When clutch 13 is engaged, it drives a sleeve 17 mounted freely rotatably on an extension of shaft 15. Shaft 15 carries integral input gears 18, 19 and 21 for first, third and reverse gear ratios respectively. Sleeve 17 carries integral input gears 22 and 23 for second and fourth gear ratios respectively.

A lay shaft 24 carries output gears 25, 26, 27 and 28 respectively for first, third, second and fourth gear ratios. These output gears mesh respectively with input gears 18, 19, 22 and 23 to form four gearsets. All of these output gears are in themselves freely rotatable on shaft 24. A reverse output gear 29 is carried on a gear selector ring 31 which is splined to a shoulder 32 on lay shaft 24 for rotation therewith. Reverse output gear 29 can mesh with reverse input gear 21 through an idler gear, not in the plane of shafts 16 and 24 and thus not shown. A second selector ring 33 is splined to and slideable on a shoulder 34 of lay shaft 24 and is thus rotatable therewith. In neutral, the idler reverse gear is kept out of mesh with either input gear 21 or output gear 29 and all forward output gears 25 to 28 are rotatable freely on the lay shaft 24. To engage first

2

gear ratio, a first gear actuator GA1 moves selector ring 31 so that it engages teeth 30 of a synchromesh mechanism associated with first output gear and thus locks the first output gear 25 against rotation with respect to lay shaft 24. A similar actuator GA3 can move the same selector ring 31 to engage output gear 26 with the lay shaft and thus establish third gear ratio. Selector ring 33 can similarly be moved by actuator GA2 or GA4 to engage second or fourth gear ratio. A fifth gear actuator GAR (not shown in Figure 1) is provided to inter-engage the idler gear with both reverse gears 21 and 29 to establish reverse gear ratio. Output drive from the transmission is taken from an output drive gear 35.

First and third input gears and reverse input gear are, as previously explained, mounted on hollow input shaft 15. Input drive to this shaft is by way of the dry clutch 12 so this clutch has to be disengaged while first, third or reverse ratio is selected and then engaged to establish drive. Similarly, second and fourth input gears 22 and 23 are driven by the sleeve 17 which in turn can be driven by the wet clutch 13. Thus, to engage second or fourth gear ratio, clutch 13 must be disengaged and when the gear has been selected the clutch is re-engaged to establish drive through the transmission in second or fourth gear ratio.

In order to change between one forward ratio and the next higher or next lower ratio, the new ratio is selected while the old ratio is still driving. The clutch associated with the driving gear is then disengaged simultaneously with engagement of the clutch associated with the new ratio. This arrangement allows drive through the transmission to be continuous even during ratio changes.

All the elements of the transmission described so far are mounted within a housing 36. The housing carries a hydraulic cylinder 37 which is arranged to operate a release mechanism 38 for the dry clutch. Release and engagement of the wet clutch 13 is by way of hydraulic fluid supplied to an inlet 39. The casing also carries a pump and control valve assembly 41 which is driven continuously with the transmission input through a drive gear 42 at the input to the wet clutch and a further gear 43 mounted on the pump input shaft 44.

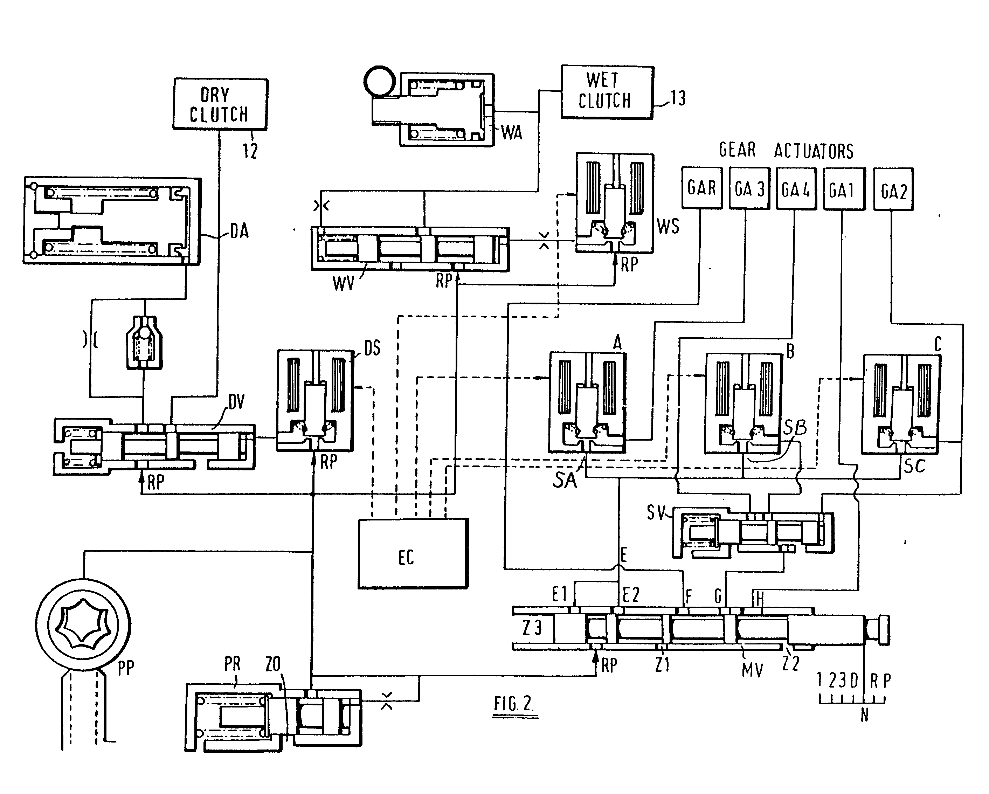

The hydraulic control system for the transmission is shown in Figure 2. This hydraulic circuit provides for engagement and disengagement of the two clutches progressively and operation of the gear actuators. The transmission also incorporates an electronic control system shown diagrammatically as a block EC. The electronic control system collects information from sensors such as road speed and torque demand sensors and from these inputs develops output signals to operate on various parts of the hydraulic control system to cause the hydraulic system to effect ratio changes as and when appropriate. Electronic control systems of this kind are well established in themselves and as details of such a system form no part of the present invention, the electronic control system is not described in detail.

The hydraulic circuitry incorporates a positive displacement pump PP driven (as shown in Figure 1) from the input to the transmission. A conventional pressure regulator PR controls the output from a pump PP to a preset level and dumps excess flow to a drain port ZO. This regulated pressure is applied to the input to various parts of the control system as indicated by various arrows RP.

A manually operable hydraulic mode selector valve MV can be moved by an operator to set the transmission in any one of seven transmission modes. Modes 1, 2 and 3 are the selection of first, second and third gear ratios respectively. Mode D is the normal drive mode in which a suitable forward ratio is selected automatically. Mode N represents neutral condition. Mode R represents engagement of reverse gear ratio. Mode P is a parking mode in which a transmission lock (not shown) is engaged. Modes 1, 2, 3, D and R are driving modes whereas modes N and P are non-driving modes. The mode selector or manual valve MV receives regulated pressure and distributes fluid at this pressure selectively to output ports E1, E2, F, G and H. Ports E1 and E2 are interconnected externally of the valve and can for most purposes be considered as a common port E. Drain ports Z1, Z2 and Z3 allow ports E to H to be connected selectively to zero pressure. The lefthand section of Table 1, set out below, indicates the nature of the connections established by the manual selector in the various modes.

TABLE 1

| Modes | Ports | | | | Solenoid states | | | Gear actuators |
|---|---|---|---|---|---|---|---|---|
| | E | F | G | H | A | B | C | |
| 1, D (1st) | RP | Z1 | H--G | | 0 | 1 | 1 | 1, (2) |
| 2, D (2nd) | RP | Z1 | H--G | | 0 | 0 | 1 | 2 |
| 3, D (3rd) | RP | Z1 | H--G | | 1 | 0 | 0 | 3 |
| D (4th) | RP | Z1 | H--G | | 0 | 1 | 0 | 4 |
| N | Z1 | G--F | | Z2 | 0 | 0 | 0 | — |
| R | RP | G--F | | Z2 | 0 | 1 | 1 | R, (2) |
| P | Z3 | Z1 | C | Z2 | 0 | 0 | 0 | — |

Thus, in all forward driving modes, regulated pressure is supplied to port E, Port F is connected to zero pressure and ports G and H are interconnected. In neutral, as shown in Figure 2, the supply of regulated pressure is closed off. Ports E and H are connected to drain while ports G and F are interconnected. This closing off of the supply of pressure in neutral is a particularly important safety feature because, as will become apparent subsequently, it helps to ensure that even if other parts of the transmission malfunction, a driving mode is not selected when neutral is intended. In reverse mode, pressure is supplied to port E while ports G and F are interconnected and in the parking mode regulated pressure is again cut off at the inlet to the valve while ports E, F and H are connected directly to drain. Port G is closed off as indicated by letter C in Table 1.

In all driving modes, pressure is supplied from the manual selector to inputs SA, SB and SC of three electro-hydraulic solenoid valves A, B and C. The solenoid valves are opened or closed selectively depending on the gear ratio or ratios which should be selected. Simultaneous engagement of two ratios is required during gear changing. The outputs from the solenoid valves are connected to the gear actuators GA1 to GA4 and GAR, either directly or through other hydraulic valves to be described. The righthand section of Table 1 indicates which of the solenoids is actuated to open the valve. An open valve is represented by a 1 and a closed valve by a 0. The gear actuators pressurised in these states are also indicated in the last column of Table 1.

Solenoid valve A is connected directly to actuator GA3. Solenoid valve B is connected through a spool valve SV to actuator GA4 when the spool valve is in the position shown. Solenoid valve C is connected directly to actuator GA2 but also to the spool valve SV to move the spool to the left when solenoid valve C is actuated. This movement of the spool valve cuts off actuator GA4 from solenoid B and applies pressure from solenoid valve B to port G of the manual valve. As can be seen from figure 2 and Table 1, port G is connected to port H and thus to actuator GA1 when a forward mode is selected. When reverse is selected (and coincidentally also when neutral is selected) port G is connected to port F and thus to the reverse gear actuator GAR. Consideration of figure 2 and Table 1 thus show how electrical input signals to the three solenoid valves A, B and C are converted to operation of gear actuators in the required manner. It should be observed that the solenoid actuation pattern is the same in both first gear and reverse gear, namely 0 1 1. The additional information required by the system to distinguish between a requirement for first and reverse is of course the manual valve. It should also be noted that in first and reverse gear ratios, second gear ratio is also actuated. However, the wet clutch is held disengaged in first and reverse gear ratios so there is no drive through second gear.

During ratio changes, it is necessary to have two gear ratios engaged simultaneously. Table 2 shows the operative states of the solenoids during the various gear ratios changes and also for convenience repeats the corresponding operative states when a particular gear ratio is engaged.

4

**0 120 617**

TABLE 2

| Transmission state | Solenoid states | | |
|---|---|---|---|
| | A | B | C |
| N | 0 | 0 | 0 |
| R | 0 | 1 | 1 |
| 1 | 0 | 1 | 1 |
| 1—2 | 0 | 1 | 1 |
| 2 | 0 | 0 | 1 |
| 2—3 | 1 | 0 | 1 |
| 3 | 1 | 0 | 0 |
| 3—4 | 1 | 1 | 0 |
| 4 | 0 | 1 | 0 |

Table 2 indicates that there are nine different gear selection conditions. With only three binary solenoids, the number of combinations available is eight. As it is desirable to avoid the 1 1 1 combination in which all solenoids are actuated simultaneously, the effective number of available combinations is seven. Thus one would expect to have to go to the expense of a fourth solenoid valve to distinguish the nine conditions. However, by engaging first and second gear ratios simultaneously (but with one clutch disengaged) during steady state operation in first gear ratio, the same gear ratio selection criteria are employed for both first gear ratio and the 1—2 change. This reduces the number of transmission selection states to eight which would make operation with three solenoids just possible but only if the 1 1 1 state is used. However, as can be seen from Table 2 and figure 2, the same solenoid states, namely 0 1 1 are employed for reverse and first selection. The fluid pressure supply from the solenoids is routed through the manual valve MV via spool valve SV and port G and final selection of first or reverse gear ratio is distinguished by connecting port G to either port F for reverse or to port H for first.

Figure 2 also shows the hydraulic controls for the clutches. For the dry clutch for engagement of first, third and reverse gear ratio, fluid at regulated pressure from pump PP is supplied to a dry clutch control valve DV from which there is a connection to the clutch cylinder shown as 37 in figure 1. Valve DV is in turn controlled from a solenoid valve DS. Solenoid valve DS is in turn operated intermittently by pulses in such a way as to control the valve DV and give a controlled rate of clutch actuation. Accumulator DA also assists in control of the operation of the dry clutch.

The wet clutch is operated in a manner similar to the dry clutch operation by a wet clutch control valve WV, a solenoid valve WS and an accumulator WA. Accumulator WA incorporates a pressure transducer which gives a signal indicating the extent of clutch engagement and this signal can be used to synchronise the operation of the two clutches.

The electronic clutch control signals to solenoids DS and WS and the binary signals for solenoid valves A, B and C are selected by the electronic control system in conjunction with the position of the manual selector valve MV and other criteria such as speed and torque demand in such a way as to control the transmission into effecting smooth ratio changes at appropriate speeds.

For convenience, reference has been made through-out this specification to five individual gear actuators. In practice, where one selector ring moves in one direction to select one ratio and in the opposite direction to select a different ratio, two individual actuators would be replaced by one dual actuator. Reference throughout the specification to individual actuators is intended to include reference to the appropriate function of a dual actuator.

**Claims**

1. An electro-hydraulic control system for an automatic power transmission of the kind providing forward gear ratios, neutral and reverse gear ratio in which forward ratio changes are effected under power by releasing one clutch (12 or 13) interconnecting the transmission input and output through one engaged gearset simultaneously with engaging another clutch (13 or 12 respectively) interconnecting the input and output through another engaged gearset, the control system comprising hydraulic gear actuators (GA1, GA2, GA3, GA4, GAR) each for engaging and disengaging a separate gearset and electro-hydraulic valves

5

(A, B, C) for controlling the supply of hydraulic fluid to the actuators in response to electrical ratio selection signals, characterised by the provision of a manually operable hydraulic mode selector valve (MV) arranged to supply the electro-hydraulic valves with fluid under pressure when a driving mode is selected thereby but to cut off all possible fluid pressure supply to and thus from the electro-hydraulic valves when a non-driving mode such as neutral is selected.

2. A control system as claimed in claim 1 characterised in that common ratio selection signals (A=0, B=1, C=1) are provided for reverse gear ratio and a forward gear ratio and the hydraulic output of the electro-hydraulic valves (B and C) is supplied via the mode selector (MV) to either the reverse gear actuator (GAR) or the forward gear actuator (GA1) for the last mentioned forward ratio, dependent on whether the mode selector is set to a forward mode or reverse mode.

3. A control system as claimed in claim 2 characterised in that said forward ratio is first (lowest) gear ratio.

4. A control system as claimed in claim 3 characterised in that three electro-hydraulic valves (A, B, C,) are provided for a four gear ratio and reverse transmission wherein a first electro-hydraulic valve (A) controls operation of third gear actuator (GA3), a second electro-hydraulic valve (B) controls operation of fourth gear actuator (GA4) through a changeover valve (SV) which when the third electro-hydraulic valve (C) is energised is changed over to control the supply to the mode selector (MV) and hence to first or reverse gear actuators (GA1 or GAR), the third electro-hydraulic valve (C) controlling supply to second gear actuator (GA2) as well as the changeover valve, second gear ratio being held disengaged by the second clutch (13) when first or reverse gear ratio is engaged through the first clutch (12).

**Patentansprüche**

1. Elektro-hydraulisches Steuersystem für ein automatisches Kraftübertragungsgetriebe, das Vorwärtsgänge, eine Leerlaufstellung und einen Rückwärtsgang hat und bei dem Vorwärtsgangwechsel unter Last durch Ausrücken einer Kupplung (12 oder 13), welche den Getriebeeingang und -ausgang über eine in Eingriff stehende Zahnradgruppe verbindet, und gleichzeitiges Einrücken einer anderen Kupplung (13 bzw. 12), welche den Eingang und den Ausgang über eine andere in Eingriff stehende Zahnradgruppe verbindet, bewirkt werden, wobei das Steuersystem hydraulische Gangschaltvorrichtungen (GA1, GA2, GA3, GA4, GAR), von denen jede zum Einrücken und Ausrücken einer getrennten Zahnradgruppe ist, und elektro-hydraulische Ventile (A, B, C) zum Steuern der Zufuhr von Hydraulikfluid zu den Schaltvorrichtungen in Abhängigkeit von elektrischen Gangwahlsignalen umfaßt, gekennzeichnet durch ein manuell betätigbares hydraulisches Betriebsartwählventil (MV), das dafür ausgebildet ist, die elektro-hydraulischen Ventile mit Druckfluid zu beschicken, wenn eine Fahrbetriebsart dadurch gewählt ist, aber die gesamte mögliche Fluiddruckzufuhr zu und somit von den elektro-hydraulischen Ventilen zu unterbrechen, wenn eine Nichtfahrbetriebsart, wie die Leerlaufstellung, gewählt ist.

2. Steuersystem nach Anspruch 1, dadurch gekennzeichnet, daß gemeinsame Gangwahlsignale (A=0, B=1, C=1) für den Rückwärtsgang und einen Vorwärtsgang bereitgestellt werden, und die hydraulische Ausgabe der elektro-hydraulischen Ventile (B und C) über den Betriebsartwähler (MV) entweder der Rückwärtsgangschaltvorrichtung (GAR) oder der Vorwärtsgangschaltvorrichtung (GA1) für den zuletzt erwähnten Gang, je nachdem, ob der Betriebsartwähler auf eine Vorwärtsbetriebsart oder Rückwärtsbetriebsart eingestellt ist, zugeführt wird.

3. Steuersystem nach Anspruch 2, dadurch gekennzeichnet, daß der Vorwärtsgang der erste (niedrigste) Gang ist.

4. Steuersystem nach Anspruch 3, dadurch gekennzeichnet, daß drei elektro-hydraulische Ventile (A, B, C) für ein Viergang- und Rückwärtsganggetriebe vorgesehen sind, in dem ein erstes elektro-hydraulisches Ventil (A) den Betrieb der Schaltvorrichtung (GA3) für den dritten Gang steuert, ein zweites elektro-hydraulisches Ventil (B) den Betrieb der Schaltvorrichtung (GA4) für den vierten Gang über ein Umschaltventil (SV) steuert, das im eingeschalteten Zustand des dritten elektro-hydraulischen Ventiles (C) umgeschaltet wird, um die Zufuhr zu dem Betriebsartwähler (MV) und deshalb zu den Gangschaltvorrichtungen (GA1 oder GAR) für den ersten Gang oder Rückwärtsgang zu steuern, wobei das dritte elektro-hydraulische Ventil (C) die Zufuhr zu der Schaltvorrichtung (GA2) für den zweiten Gang sowie zu dem Umschaltventil steuert, wobei der zweite Gang durch die zweite Kupplung (13) im ausgerückten Zustand gehalten wird, wenn der erste Gang oder Rückwärtsgang durch die erste Kupplung (12) eingelegt ist.

**Revendications**

1. Système de contrôle électro-hydraulique pour une transmission de puissance automatique du type dans lequel il existe quatre rapports d'engrenages de marche avant, un point mort, et un rapport d'engrenages de marche arrière, dans lequel les changements de rapport de marche avant sont effectués en cours de marche en relâchant un embrayage (12 ou 13) interconnectant l'entrée et la sortie de transmission par l'intermédiaire d'un ensemble d'engrenages en prise, tout en engageant simultanément un autre embrayage (13 ou 12 respectivement) interconnectant l'entrée et la sortie par l'intermédiaire d'un autre ensemble d'engrenages en prise, le système de contrôle comportant des actionneurs hydrauliques d'engrenages (GA1, GA2, GA3, GA4, GAR), chacun pour engager et désengager un ensemble d'engrenages séparé et des vannes électro-hydrauliques (A, B, C) pour contrôler l'alimentation de fluide hydraulique aux actionneurs en réponse à des signaux électriques de sélection de rapport, caractérisé en ce qu'il est prévu une vanne actionnable manuellement, hydraulique de sélection du mode de déplacement, disposée pour alimenter les vannes électro-hydrauliques en fluide sous pression lorsqu'un mode de déplacement est sélectionné, mais pour couper toute alimentation possible de pression de fluide vers et venant des vannes électro-hydrauliques lorsqu'un mode de non déplacement tel que le point mort est sélectionné.

2. Système de contrôle suivant la revendication 1, caractérisé en ce que des signaux de sélection de rapports communs (A=0, B=1, C=1) sont prévus pour un rapport d'engrenages de marche arrière et un rapport d'engrenages de marche avant et la sortie hydraulique des vannes électro-hydrauliques (B, C) est alimentée par l'intermédiaire du sélecteur de mode (MV) soit vers l'actionneur d'engranages de marche arrière (GAR), soit vers l'actionneur d'engranages de marche avant (GA1) pour le rapport de marche avant mentionné en dernier, suivant que le sélecteur est positionné dans un mode de marche avant ou un mode de marche arrière.

3. Système de contrôle suivant la revendication 2, caractérisé en ce que ledit rapport de marche avant est le premier (le plus bas) rapport d'engrenages.

4. Système de contrôle suivant la revendication 3, caractérisé en ce que trois vannes électro-hydrauliques (A, B, C) sont prévues pour un rapport d'engrenages à quatre vitesses et une marche arrière, dans lequel une première vanne électro-hydraulique (A) contrôle le fonctionnement du troisième actionneur d'engrenages (GA3), une seconde vanne électro-hydraulique (B) contrôle le fonctionnement du quatrième actionneur d'engrenages (GA4) à travers une vanne de commutation (SV) qui lorsque la troisième vanne électro-hydraulique (C) est activée, est commutée pour contrôler l'alimentation au sélecteur de mode (MV) et ainsi aux actionneurs d'engrenages de la première vitesse et de marche arrière (GA1 ou GAR), la troisième vanne électro-hydraulique (C) contrôlant l'alimentation du second actionneur d'engrenages (GA2) ainsi que la vanne de commutation, le second rapport d'engrenages étant maintenu désengagé par le second embrayage (13) lorsque le rapport d'engrenages de première vitesse ou de marche arrière est engagé par l'intermédiaire du premier embrayage (12).

FIG.1.

0 120 617

FIG. 2.